# FASCICULE DE BREVET EUROPEEN

(11) **EP 1 733 577 B1**
(45) Date de publication et mention de la délivrance du brevet: **19.05.2010**
(21) Numéro de dépôt: 05734378.2
(22) Date de dépôt: 03.03.2005
(51) Int. Cl.: H04B 7/26

(54) **SIGNAL DE RADIOTELEPHONIE CELLULAIRE PERMETTANT UNE SYNCHRONISATION AU NIVEAU D'UNE TRAME D'UN CANAL SUPPLEMENTAIRE PAR NUMEROTATION DES SYMBOLES**
ZELLULARFUNKSPRECHSIGNAL DAS DIE RAHMENSYNCHRONISIERUNG EINES HILFSKANALS MITTELS EINER SYMBOLNUMMERIERUNG ERMÖGLICHT
CELLULAR RADIOTELEPHONE SIGNAL WHICH ENABLES SYNCHRONISATION AT A FRAME OF A SUPPLEMENTARY CHANNEL BY MEANS OF SYMBOL NUMBERING

(30) Priorité: 06.04.2004 FR 0403618
(43) Date de publication de la demande: 20.12.2006
(73) Titulaire: Wavecom, 92442 Issy les Moulineaux Cedex (FR)
(72) Inventeur: IBRAHIM, Nicolas, F-78180 Montigny Le Bretonneux (FR); VUJCIC, Dragan, F-91400 Orsay (FR)
(74) Mandataire: Guéné, Patrick
(86) Numéro de dépôt international: PCT/FR2005/000516
(87) Numéro de publication internationale: WO 2005/109926

(56) Documents cités:
- US-B1- 6 504 830
- US-B1- 6 516 199
- RALF KERN ET AL: "Kombination einer OFDM-basierten Luftschnittstelle mit einem UMTS-basierten Ansatz mittels Anpassung der zeitlichen Laenge eines OFDM-Multiblocks an die zeitliche Laenge eines UMTS-Time Slot" SIEMENS TEKINK REPORT, vol. 2003-2, février 2003 (2003-02), XP007006107
- "Universal Mobile Telecommunications System (UMTS); UTRA High Speed Downlink Packet Access (HSDPA); Overall description; Stage 2 (3GPP TS 25.308 version 5.4.0 Release 5); ETSI TS 125 308" ETSI STANDARDS, EUROPEAN TELECOMMUNICATIONS STANDARDS INSTITUTE, SOPHIA-ANTIPO, FR, vol. 3-R2, no. V540, mars 2003 (2003-03), XP014008696 ISSN: 0000-0001

## Description

### 1. Domaine de l'invention

Le domaine de l'invention est celui de la radiotéléphonie cellulaire. Plus précisément, l'invention concerne la transmission des données, en particulier à des débits élevés, dans un système de radiotéléphonie.

Les systèmes de radiotéléphonie connus, tels que le G.S.M, sont essentiellement dédiés aux communications vocales. Ils mettent en oeuvre un canal comprenant deux voies symétriques : une voie descendante (d'une station de base terrestre vers une station mobile) et une voie montante (de la station mobile vers la station de base).

Les systèmes en cours de développement reposent également sur une telle structure. Ainsi, le standard UMTS défini par l'ETSI prévoit une répartition symétrique entre la voie descendante et la voie montante.

Il a également été proposé de compléter le système de radiotéléphonie en ajoutant au canal principal au moins un canal supplémentaire, uniquement descendant et dédié à la transmission de données à haut débit, telles que des fichiers transmis sur le réseau Internet.

Dans le cadre de la présente invention, on suppose que le système de radiotéléphonie est du type comprenant un canal principal bidirectionnel symétrique et au moins un canal supplémentaire tel que précité.

On suppose également que le canal supplémentaire met en oeuvre une technique multiporteuse assurant une répartition des données dans l'espace temps/fréquence, et présente une structure en entités prédéfinies comprenant chacune un nombre prédéterminé de symboles. Par entités prédéfinies, on entend des trames ou des sous-trames.

Plus précisément, l'invention concerne une technique permettant, dans un terminal d'un système de radiotéléphonie tel que précité, une synchronisation au niveau de l'entité considérée (trame ou sous-trame) du canal supplémentaire.

L'invention s'applique notamment, mais non exclusivement, à la synchronisation au niveau trame ou sous-trame d'un lien supplémentaire OFDM HS-DPA (canal supplémentaire) associé à un lien principal UMTS (canal principal bidirectionnel symétrique).

### 2. Solutions de l'art antérieur

Dans un souci de simplification, on présente ci-après les inconvénients de l'art antérieur en relation avec l'application particulière suivante : synchronisation au niveau sous-trame d'un lien supplémentaire OFDM HS-DPA associé à un lien principal UMTS. Il est clair cependant que cette discussion peut être transposée à d'autres systèmes de radiotéléphonie comprenant un canal principal bidirectionnel symétrique et au moins un canal supplémentaire. Cette discussion peut également être transposée à une synchronisation au niveau trame du lien supplémentaire.

On rappelle que le lien supplémentaire HS-DPA (pour « High-Speed Downlink Packet Access ») est un lien descendant haut débit associé au lien principal UMTS. Il vise à augmenter le débit descendant afin d'offrir des services nécessitant du haut débit (multimédia, vidéo streaming, etc.).

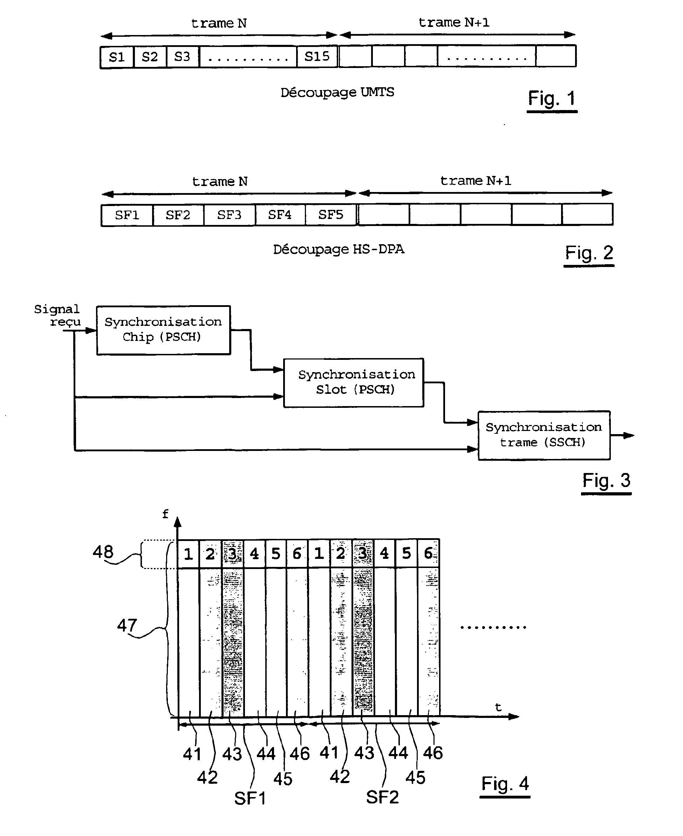

Comme illustré sur la **figure 1****,** le lien principal UMTS présente une structure organisée en trames N, N+1 comprenant chacune 15 slots (intervalles de temps) S1 à S15. Comme illustré sur la **figure 2****,** le lien supplémentaire HS-DPA présente une structure organisée en trames N, N+1 comprenant chacune jusqu'à 5 sous-trames SF1 à SF5. Par ailleurs, chaque slot ou sous-trame comprend un ensemble de symboles, et chaque symbole comprend un ensemble d'unités de signal (chips).

Deux solutions techniques sont proposées pour la couche physique du lien supplémentaire HS-DPA :
- un système à étalement de spectre conforme au système UMTS ;
- un système basé sur une modulation multi-porteuse OFDM.

Avec la première solution, on obtient un lien supplémentaire UMTS HS-DPA qui est inhérent au système UMTS. Il peut donc bénéficier de toutes les techniques déjà utilisées par le lien principal UMTS, telles que l'estimation du canal, le contrôle de puissance et des horloges, et notamment la synchronisation qui se fait avec le signal CPICH spécifié dans la norme UMTS.

Avec la deuxième solution, on obtient un lien supplémentaire OFDM HS-DPA, qui utilise une modulation différente de celle utilisée dans le système UMTS (étalement de spectre, CDMA). De ce fait, il ne peut pas utiliser toutes les techniques utilisées dans le système UMTS. Il doit donc utiliser des techniques spécifiques afin d'accomplir les mêmes fonctionnalités. Néanmoins, une certaine adaptation au contexte peut faciliter l'établissement et le maintien de la communication du lien OFDM.

Une sous-trame OFDM du lien supplémentaire OFDM HS-DPA et une sous-trame UMTS du lien supplémentaire UMTS HS-DPA UMTS possèdent une même durée (à savoir 2 ms).

La synchronisation en temps est un des éléments clés de l'établissement d'une communication. Cette synchronisation est découpée en plusieurs « couches », du fait de la nature du système de communication cellulaire radio-mobile qui définit les deux entités : sous-trame et trame (voir figure 2). Ainsi, pour le lien supplémentaire HS-DPA, cette synchronisation se divise en plusieurs étapes :
- synchronisation au niveau chip, qui consiste à trouver la position des symboles (et donc des chips compris dans ces symboles) selon l'horloge utilisée ;
- synchronisation au niveau sous-trame, qui consiste à trouver le début des sous-trames ;
- synchronisation au niveau trame, qui consiste à trouver le début de chaque trame.

La synchronisation du lien supplémentaire UMTS HS-DPA peut être réalisée relativement aisément. En effet, comme indiqué ci-dessus, du fait que le lien supplémentaire UMTS HS-DPA est intimement lié au système UMTS, sa synchronisation peut directement s'appuyer sur celle du lien principal UMTS. Ainsi, la synchronisation initiale au niveau chip du lien supplémentaire UMTS HS-DPA peut se faire par une auto-corrélation temporelle sur un signal de synchronisation spécifique (PSCH) prévu dans l'UMTS. Ayant acquis cette synchronisation au niveau chip, la synchronisation au niveau sous-trame du lien supplémentaire UMTS HS-DPA peut se faire par une recherche du début des slots UMTS (sachant que chaque sous-trame contient un nombre prédéterminé de slots UMTS, par exemple 3). Cette recherche est faite à l'aide du signal PSCH. Ce signal est en forme de paquet de 256 chips identiques émis au début de chaque slot. Enfin, la synchronisation trame du lien supplémentaire UMTS HS-DPA est effectuée en utilisant le signal SSCH (Secondary Synchronisation Channel) qui a la même forme que le signal PSCH à l'exception du fait que les paquets de 256 chip transmis sont modulés par des information connues. La **figure 3** illustre l'ordre des différentes étapes de synchronisation du lien supplémentaire UMTS HS-DPA, au niveaux chip, slot et trame respectivement.

En revanche, la synchronisation du lien supplémentaire OFDM HS-DPA est aujourd'hui plus difficile à réaliser car ce dernier, contrairement au lien supplémentaire UMTS HS-DPA, n'est pas intimement lié au système UMTS.

Selon la technique actuelle, la synchronisation au niveau chip du lien supplémentaire OFDM HS-DPA peut être obtenue en utilisant l'intervalle de garde qui représente une partie du symbole OFDM (la dernière partie). Cette synchronisation au niveau chip s'obtient par une simple auto-corrélation classique sur le signal OFDM HS-DPA reçu.

Une telle technique de synchronisation est notamment décrite dans le document « Kombination einer OFDM-basierten Luftschnittstelle mit einem UMTS-basierten Ansatz mittels Anpassung der zeitlichen Laenge eines OFDM-Multiblocks an die zeitliche Laenge eines UMTS-Time Slot, SIEMENS TEKINK REPORT. vol.2003-2.

Mais, une fois cette synchronisation au niveau chip obtenue, il est impossible de connaître le début des sous-trames et des trames car le signal OFDM spécifié dans le cadre HS-DPA ne contient pas les signaux PSCH et SSCH nécessaires aux synchronisations aux niveaux sous-trame et trame.

Selon la technique actuelle, la synchronisation au niveau sous-trame du lien supplémentaire OFDM HS-DPA est propre au système OFDM et repose sur l'insertion de signaux spécifiques (en forme de symboles OFDM) à la synchronisation au niveau sous-trame.

L'inconvénient majeur de la technique actuelle est que les signaux de synchronisation spécifiques précités augmentent la charge du lien supplémentaire OFDM HS-DPA., ou pour une charge fixe, font baisser le débit utile.

### 3. Objectifs de l'invention

L'invention a notamment pour objectif de pallier cet inconvénient majeur de la technique actuelle.

Plus précisément, l'un des objectifs de la présente invention est de fournir une nouvelle technique permettant de faciliter la synchronisation au niveau de l'entité considérée (trame ou sous-trame) du canal supplémentaire d'un système de radiotéléphonie cellulaire (notamment un lien supplémentaire OFDM HS-DPA associé à un lien principal UMTS).

L'invention a également pour objectif de fournir une telle technique qui limite l'ajout de signaux spécifiques à la synchronisation au niveau de l'entité considérée, et permette de conserver la structure initialement définie pour le canal supplémentaire.

Un autre objectif de l'invention est de fournir une telle technique qui soit simple à mettre en oeuvre et peu coûteuse.

Encore un autre objectif de l'invention est de fournir une telle technique qui, dans le cas où elle permet une synchronisation au niveau sous-trame du canal supplémentaire, rende également aisée la synchronisation au niveau trame du canal supplémentaire.

### 4. Caractéristiques essentielles de l'invention

Ces différents objectifs, ainsi que d'autres qui apparaîtront par la suite, sont atteints selon l'invention à l'aide d'un Signal de radiotéléphonie cellulaire, du type comprenant :
- un canal principal bidirectionnel symétrique, comprenant une voie montante principale et une voie descendante principale, assurant notamment la transmission à bas ou moyen débit de données et d'informations de signalisation et de contrôle ;
- au moins un canal supplémentaire affecté au sens descendant uniquement, assurant notamment la transmission de données à haut débit, mettant en oeuvre une technique multiporteuse assurant une répartition des données dans l'espace temps/fréquence, et présentant une structure en entités prédéfinies comprenant chacune un nombre prédéterminé de symboles.

Selon l'invention, au moins un symbole de chaque entité du canal supplémentaire comprend un identifiant de position, permettant d'identifier la position dudit symbole dans ladite entité, de façon qu'un terminal puisse lire l'identifiant de position dudit symbole et en déduire le début de l'entité suivante, obtenant ainsi une synchronisation au niveau de l'entité considérée du canal supplémentaire.

Dans un premier mode de réalisation particulier de l'invention, lesdites entités prédéfinies sont des sous-trames du canal supplémentaire.

Dans un second mode de réalisation particulier de l'invention, lesdites entités prédéfinies sont des trames du canal supplémentaire.

Préférentiellement, chaque symbole du canal supplémentaire comprend un identifiant de position.

Le fait que tous les symboles comprennent un identifiant de position permet d'optimiser la synchronisation au niveau de l'entité considérée (trame ou sous-trame) du canal supplémentaire.

Il est clair cependant que la présente invention couvre également les cas où seulement certains (voire même un seul) des symboles de chaque entité comprennent(d) un identifiant de position.

Dans un premier mode de réalisation particulier de l'invention, ledit identifiant de position est inséré en fréquence.

Avantageusement, dans le cas où ladite technique multiporteuse utilise une pluralité de fréquences sous-porteuses réparties sur une bande de fréquence déterminée, ledit identifiant de position comprend des bits portés par des sous-porteuses regroupées dans une même portion prédéfinie de ladite bande de fréquence, de façon à subir un canal quasi-constant.

De façon avantageuse, ledit identifiant de position est codé avec un codage différentiel.

Dans un second mode de réalisation particulier de l'invention, ledit identifiant de position est inséré en temps.

Avantageusement, le canal principal et/ou le canal supplémentaire assure(nt) la transmission d'informations relatives au rang, au sein d'une trame de la structure du canal supplémentaire, d'une sous-trame dont le début peut être détecté, de façon à permettre une synchronisation au niveau trame du canal supplémentaire en détectant le début de la trame suivante, en fonction de ladite synchronisation au niveau sous-trame et desdites informations relatives au rang de ladite sous-trame.

De façon avantageuse, le canal principal et/ou le canal supplémentaire assure(nt) en outre la transmission d'informations relatives au mode de transmission des sous-trames sur le canal supplémentaire, ladite synchronisation au niveau trame du canal supplémentaire étant fonction en outre desdites informations relatives au mode de transmission.

Dans un mode de réalisation avantageux de l'invention, le canal principal met en oeuvre une technique d'accès à étalement de spectre (CDMA), et est préférentiellement un lien UMTS. Par ailleurs, ledit canal supplémentaire met par exemple en oeuvre une technique multiporteuse basée sur une modulation OFDM ou une modulation IOTA.

Le principe et la mise en oeuvre de la modulation IOTA sont décrits dans la demande de brevet français FR-95 05455, incorporée ici par référence.

Avantageusement, le canal principal assure au préalable la transmission d'une notification invitant ledit terminal à effectuer ladite synchronisation au niveau de l'entité considérée du canal supplémentaire, en vue d'un basculement du terminal du canal principal vers le canal supplémentaire.

Il est à noter que cette procédure de notification (qui utilise préférentiellement le canal de paging du canal principal), peut être utilisée pour lancer tout type de procédure de synchronisation au niveau de l'entité considérée (trame ou sous-trame) du canal supplémentaire, et donc également la procédure classique précitée (c'est-à-dire basée sur des signaux spécifiques de synchronisation transmis sur le canal supplémentaire).

Dans le cadre de la présente invention, cette notification invite donc le terminal à détecter et lire un identifiant de position d'un symbole courant sur le canal supplémentaire.

Préférentiellement, ladite notification est transmise sur un canal de paging compris dans ledit canal principal.

L'invention concerne également un procédé de synchronisation d'un canal supplémentaire associé à un canal principal bidirectionnel symétrique ; ledit canal principal bidirectionnel symétrique comprenant une voie montante principale et une voie descendante principale, assurant notamment la transmission à bas ou moyen débit de données et d'informations de signalisation et de contrôle ; ledit canal supplémentaire étant affecté au sens descendant uniquement, assurant notamment la transmission de données à haut débit, mettant en oeuvre une technique multiporteuse assurant une répartition des données dans l'espace temps/fréquence, et présentant une structure en entités prédéfinies comprenant chacune un nombre prédéterminé de symboles. Selon l'invention, le procédé comprend une étape de synchronisation du canal supplémentaire au niveau de l'entité considérée, comprenant elle-même les étapes suivantes :
- détection et lecture d'un identifiant de position d'un symbole courant sur le canal supplémentaire, ledit identifiant de position permettant d'identifier la position dudit symbole dans l'entité à laquelle il appartient ;
- déduction du début de l'entité suivante en fonction de l'identifiant de position du symbole courant.

L'invention concerne aussi un terminal d'un système de radiotéléphonie cellulaire, du type comprenant des moyens d'émission d'une voie montante principale, des moyens de réception d'une voie descendante principale et des moyens de réception d'au moins un canal supplémentaire ; ladite voie montante principale et ladite voie descendante principale formant un canal principal bidirectionnel symétrique assurant notamment la transmission à bas ou moyen débit de données et d'informations de signalisation et de contrôle ; ledit canal supplémentaire étant affecté au sens descendant uniquement, assurant notamment la transmission de données à haut débit, mettant en oeuvre une technique multiporteuse assurant une répartition des données dans l'espace temps/fréquence, et présentant une structure en entités prédéfinies comprenant chacune un nombre prédéterminé de symboles. Selon l'invention, le terminal comprend des moyens de synchronisation du canal supplémentaire au niveau de l'entité considérée, comprenant eux-mêmes :
- des moyens de détection et lecture d'un identifiant de position d'un symbole courant sur le canal supplémentaire, ledit identifiant de position permettant d'identifier la position dudit symbole dans l'entité à laquelle il appartient ;
- des moyens de déduction du début de l'entité suivante en fonction de l'identifiant de position du symbole courant.

L'invention concerne encore une station de base d'un système de radiotéléphonie cellulaire, du type comprenant des moyens de réception d'une voie montante principale, des moyens d'émission d'une voie descendante principale et des moyens d'émission d'au moins un canal supplémentaire ; ladite voie montante principale et ladite voie descendante principale formant un canal principal bidirectionnel symétrique assurant notamment la transmission à bas ou moyen débit de données et d'informations de signalisation et de contrôle ; ledit canal supplémentaire étant affecté au sens descendant uniquement, assurant notamment la transmission de données à haut débit, mettant en oeuvre une technique multiporteuse assurant une répartition des données dans l'espace temps/fréquence, et présentant une structure en entités prédéfinies comprenant chacune un nombre prédéterminé de symboles. Selon l'invention, la station de base comprend des moyens d'insertion d'un identifiant de position dans au moins un symbole de chaque entité du canal supplémentaire, ledit identifiant de position permettant d'identifier la position dudit symbole dans ladite entité, de façon qu'un terminal puisse lire l'identifiant de position dudit symbole et en déduire le début de l'entité suivante, obtenant ainsi une synchronisation au niveau de l'entité considérée du canal supplémentaire.

### 5. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 illustre la structure connue d'un lien principal UMTS, organisée en trames et slots ;
- la figure 2 illustre la structure connue d'un lien supplémentaire HS-DPA (OFDM ou UMTS), organisée en trames et sous-trames ;
- la figure 3 illustre, dans le cadre de la technique connue, les relations entre les trois synchronisations du lien supplémentaire UMTS HS-DPA, aux niveaux chip, slot et trame respectivement ;
- la figure 4 illustre un lien supplémentaire OFDM HS-DPA selon un mode de réalisation particulier de l'invention, dans lequel les symboles sont numérotés ;
- la figure 5 illustre, dans le cadre de la technique selon l'invention, les relations entre les trois synchronisations du lien supplémentaire OFDM HS-DPA, aux niveaux chip, sous-trame et trame respectivement.

### 6. Description d'un mode de réalisation de l'invention

Dans la suite de la description, on considère, à titre d'exemple, le cas d'un signal de radiotéléphonie cellulaire comprenant un lien principal UMTS (canal principal bidirectionnel symétrique) et un lien supplémentaire OFDM HS-DPA (canal supplémentaire).

L'invention définit des caractéristiques de ce signal, permettant de faciliter la synchronisation au niveau sous-trame, ainsi qu'aux niveaux chip et trame, du lien supplémentaire OFDM HS-DPA.

La **figure 4** illustre un lien supplémentaire OFDM HS-DPA selon un mode de réalisation particulier de l'invention, dans lequel les symboles sont numérotés.

Comme déjà indiqué ci-dessus (voir discussion de la figure 2), le lien supplémentaire OFDM HS-DPA présente une structure organisée en trames N, N+1 comprenant chacune jusqu'à 5 sous-trames SF1 à SF5 de 2 ms. Chaque sous-trame SF1 à SF5 comprend un ensemble de symboles. Chaque symbole comprend un ensemble d'unités de signal (chips).

Dans l'exemple illustré sur la figure 4, on a représenté deux sous-trames successives SF1, SF2 du lien supplémentaire OFDM HS-DPA. Chacune comprend six symboles 41 à 46. De façon classique, chaque symbole OFDM HS-DPA est codé sur une pluralité de fréquences sous-porteuses réparties sur une bande de fréquence prédéterminée 47.

Dans le mode de réalisation particulier de l'invention illustré sur la figure 4, chaque symbole OFDM HS-DPA comprend un identifiant de position, indiquant sa position au sein de la sous-trame dans laquelle il est contenu. L'identifiant de position est ici un numéro d'une séquence de numéros allant de 1 à 6, et qui est répétée à chaque sous-trame.

Plus généralement, on rappelle que dans le cadre de la présente invention, le lien supplémentaire présente une structure en entités prédéfinies (trames, sous-trames, ou autres) comprenant chacune un nombre prédéterminé de symboles, et l'identifiant de position compris dans un symbole donné indique la position de ce symbole au sein de l'entité dans laquelle il est contenu.

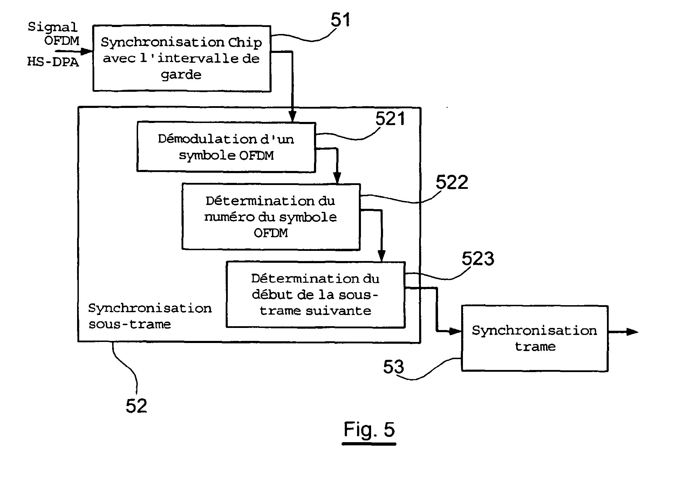

La position du numéro (ou plus généralement de l'identifiant de position) dans chaque symbole doit être connue à l'avance par le récepteur (aussi appelé terminal). Ainsi, quand il reçoit le lien supplémentaire OFDM HS-DPA, le terminal peut lire l'identifiant de position du symbole courant et en déduire le début de la sous-trame suivante (voir description détaillée ci-après, en relation avec la figure 5). De cette façon, le terminal effectue une synchronisation au niveau sous-trame du lien supplémentaire.

Dans l'exemple illustré sur la figure 4, l'identifiant de position est inséré en fréquence dans le lien supplémentaire OFDM HS-DPA. En d'autres termes, l'identifiant de position de chaque symbole est ajouté aux données du signal source avant exécution de la transformation de Fourier inverse (TFDI), ou autre traitement, qui assure le passage de fréquence en temps. On rappelle que la technique multiporteuse comprend typiquement les étapes suivantes : le signal source subit un codage de canal (s'il s'agit d'un signal numérique) ou est simplement échantillonné (s'il s'agit d'un signal analogique) ; ensuite les données sont entrelacées en fréquence et/ou en temps, pour former une série de symboles dits symboles OFDM ; puis ces symboles sont traités, par exemple par transformation de Fourier inverse (TFDI), et subissent une conversion numérique/analogique et une transposition en RF, avant d'être émis.

L'identifiant de position compris dans chaque symbole est par exemple codé avec un codage différentiel, de façon que le récepteur (terminal) puisse le décoder sans connaître le canal de propagation. On notera en effet que l'identifiant de position doit être identifié par le récepteur avant que ce dernier connaisse le canal de propagation (c'est-à-dire sans égalisation).

En outre, les bits de l'identifiant de position sont par exemple portés par des sous-porteuses regroupées dans une même portion prédéfinie 48 de la bande de fréquence 47, de façon à subir un canal quasi-constant. Cette recommandation est réalisable car la quantité d'informations nécessaire pour coder l'identifiant de position (numéro) est faible.

Selon une variante de l'invention (non illustrée), l'identifiant de position est inséré en temps dans le lien supplémentaire OFDM HS-DPA. En d'autres termes, l'identifiant de position de chaque symbole est ajouté aux données du signal source après exécution de la transformation de Fourier inverse (TFDI), ou autre traitement, qui assure le passage de fréquence en temps.

La **figure 5** illustre, dans le cadre de la technique selon l'invention, les relations entre les trois synchronisations du lien supplémentaire OFDM HS-DPA, aux niveaux chip, sous-trame et trame respectivement.

Le terminal réalise tout d'abord une synchronisation au niveau chip du lien supplémentaire OFDM HS-DPA, référencée 51. Celle-ci est par exemple obtenue en effectuant une auto-corrélation sur l'intervalle de garde, qui représente la dernière partie du symbole OFDM.

Puis, le terminal réalise la synchronisation au niveau sous-trame du lien supplémentaire OFDM HS-DPA, référencée 52. En effet, une fois la synchronisation au niveau chip obtenue, une démodulation d'un symbole OFDM HS-DPA (opération référencée 521) est possible car le début et la fin du symbole sont connus. Après démodulation du symbole OFDM, le terminal détermine le numéro (identifiant de position) de ce symbole dans la sous-trame à laquelle il appartient (opération référencée 522). Ce numéro donne des informations sur le début et la fin de la sous-trame et donc, in fine, permet de déterminer le début de la sous-trame suivante (opération référencée 523), c'est-à-dire de connaître la synchronisation au niveau sous-trame du lien supplémentaire OFDM HS-DPA.

Optionnellement, le signal de radiotéléphonie cellulaire selon l'invention permet également au terminal de réaliser de façon simple la synchronisation au niveau trame du lien supplémentaire OFDM HS-DPA, référencée 53, après que la synchronisation au niveau sous-trame 52 a été réalisée.

Ceci suppose par exemple que le terminal connaisse :
- le rang, au sein d'une trame du lien supplémentaire OFDM HS-DPA, de la sous-trame dont le début est détecté lors de l'étape 52 de synchronisation au niveau sous-trame du lien supplémentaire OFDM HS-DPA ;
- le mode de transmission des sous-trames sur le lien supplémentaire OFDM HS-DPA. Il peut en effet exister plusieurs modes : transmission de toutes les sous-trames, d'une trame sur trois, etc.

En effet, à partir du rang précité, du mode de transmission précité et de la synchronisation au niveau sous-trame, le terminal peut détecter le début de la trame suivante du lien supplémentaire OFDM HS-DPA.

La connaissance par le terminal du rang et du mode de transmission précités est par exemple obtenue par la transmission par le lien principal UMTS d'informations relatives à ce rang et à ce mode de transmission. On peut aussi envisager que cette transmission d'informations soit effectuée par le lien supplémentaire OFDM HS-DPA, seul ou en combinaison avec le lien principal UMTS.

Il est clair que de nombreux autres modes de réalisation de l'invention peuvent être envisagés.

On peut notamment prévoir que seulement une partie des symboles comprennent un identifiant de position.

On peut également prévoir que le lien principal UMTS assure au préalable la transmission d'une notification invitant le terminal à effectuer la synchronisation au niveau sous-trame du lien supplémentaire OFDM HS-DPA, en vue d'un basculement du terminal du lien principal UMTS vers le lien supplémentaire OFDM HS-DPA.

Par exemple, cette notification est transmise sur le canal de paging (canal PICH, pour « Paging Indicator CHannel ») compris dans le lien principal UMTS. On rappelle que le canal PICH appartient au système UMTS et est constitué de 300 bits (b0,..b299) transmis durant la période d'une trame de 10 ms. La longueur de la séquence d'étalement utilisée est de 256. Les derniers 12 bits (b288,..b299) ne sont pas utilisés dans la norme UMTS et sont donc libres. Afin de notifier le basculement vers le lien supplémentaire OFDM HS-DPA, ces 12 bits sont par exemple utilisés de la manière suivante :
- 4 bits pour la notification de basculement vers le lien supplémentaire (ces bits peuvent contenir des informations concernant la fréquence porteuse du canal supplémentaire) ;
- 8 bits pour indiquer le type de service, le débit, la modalité d'échange, etc.

## Revendications

1. Procédé de génération d'un signal de radiotéléphonie cellulaire, du type comprenant :
- un canal principal bidirectionnel symétrique, comprenant une voie montante principale et une voie descendante principale, assurant notamment la transmission à bas ou moyen débit de données et d'informations de signalisation et de contrôle ;
- au moins un canal supplémentaire affecté au sens descendant uniquement, assurant notamment la transmission de données à haut débit, mettant en oeuvre une technique multiporteuse assurant une répartition des données dans l'espace temps/fréquence, et présentant une structure en entités prédéfinies comprenant chacune un nombre prédéterminé de symboles,
**caractérisé en ce que** le procédé comprend une étape d'insertion dans au moins un symbole de chaque entité du canal supplémentaire d'un identifiant de position, permettant d'identifier la position dudit symbole dans ladite entité, de façon qu'un terminal puisse lire l'identifiant de position dudit symbole et en déduire le début de l'entité suivante, obtenant ainsi une synchronisation au niveau de l'entité considérée du canal supplémentaire,
et **en ce que** lesdites entités prédéfinies sont des sous-trames (SF1, SF2,...) ou des trames (N, N+1) du canal supplémentaire.

2. Procédé de génération selon la revendication 1, **caractérisé en ce que** chaque symbole du canal supplémentaire comprend un identifiant de position.

3. Procédé de génération selon l'une quelconque des revendications 1 et 2, **caractérisé en ce que** ledit identifiant de position est inséré en fréquence.

4. Procédé de génération selon la revendication 3, ladite technique multiporteuse utilisant une pluralité de fréquences sous-porteuses réparties sur une bande de fréquence déterminée (47), **caractérisé en ce que** ledit identifiant de position comprend des bits portés par des sous-porteuses regroupées dans une même portion prédéfinie (48) de ladite bande de fréquence, de façon à subir un canal quasi-constant.

5. Procédé de génération selon l'une quelconque des revendications 3 et 4, **caractérisé en ce que** ledit identifiant de position est codé avec un codage différentiel.

6. Procédé de génération selon l'une quelconque des revendications 1 et 2, **caractérisé en ce que** ledit identifiant de position est inséré en temps.

7. Procédé de génération selon l'une quelconque des revendications 2 à 6, **caractérisé en ce que** lesdites entités prédéfinies sont des sous-trames (SF1, S2,...) du canal supplémentaire, et **en ce que** le canal principal et/ou le canal supplémentaire assure(nt) la transmission d'informations relatives au rang, au sein d'une trame de la structure du canal supplémentaire, d'une sous-trame dont le début peut être détecté, de façon à permettre une synchronisation au niveau trame du canal supplémentaire en détectant le début de la trame suivante, en fonction de ladite synchronisation au niveau sous-trame et desdites informations relatives au rang de ladite sous-trame.

8. Procédé de génération selon la revendication 7, **caractérisé en ce que** le canal principal et/ou le canal supplémentaire assure(nt) en outre la transmission d'informations relatives au mode de transmission des sous-trames sur le canal supplémentaire, ladite synchronisation au niveau trame du canal supplémentaire étant fonction en outre desdites informations relatives au mode de transmission.

9. Procédé de génération selon l'une quelconque des revendications 1 à 8, **caractérisé en ce que** le canal principal met en oeuvre une technique d'accès à étalement de spectre (CDMA), et est préférentiellement un lien UMTS.

10. Procédé de génération selon l'une quelconque des revendications 1 à 9, **caractérisé en ce que** ledit canal supplémentaire met en oeuvre une technique multiporteuse basée sur une modulation OFDM ou une modulation IOTA.

11. Procédé de génération selon l'une quelconque des revendications 1 à 10, **caractérisé en ce que** le canal principal assure au préalable la transmission d'une notification invitant ledit terminal à effectuer ladite synchronisation au niveau de l'entité considérée du canal supplémentaire, en vue d'un basculement du terminal du canal principal vers le canal supplémentaire.

12. Procédé de génération selon la revendication 11, **caractérisé en ce que** ladite notification est transmise sur un canal de paging compris dans ledit canal principal.

13. Procédé de synchronisation d'un canal supplémentaire associé à un canal principal bidirectionnel symétrique,
ledit canal principal bidirectionnel symétrique comprenant une voie montante principale et une voie descendante principale, assurant notamment la transmission à bas ou moyen débit de données et d'informations de signalisation et de contrôle,
ledit canal supplémentaire étant affecté au sens descendant uniquement, assurant notamment la transmission de données à haut débit, mettant en oeuvre une technique multiporteuse assurant une répartition des données dans l'espace temps/fréquence, et présentant une structure en entités prédéfinies comprenant chacune un nombre prédéterminé de symboles,
**caractérisé en ce qu'**il comprend une étape de synchronisation du canal supplémentaire au niveau de l'entité considérée, comprenant elle-même les étapes suivantes :
- détection et lecture (521, 522) d'un identifiant de position d'un symbole courant sur le canal supplémentaire, ledit identifiant de position permettant d'identifier la position dudit symbole dans l'entité à laquelle il appartient ;
- déduction (523) du début de l'entité suivante en fonction de l'identifiant de position du symbole courant,
et **en ce que** lesdites entités prédéfinies sont des sous-trames (SF1, SF2,...) du canal supplémentaire ou des trames (N, N+1) du canal supplémentaire.

14. Procédé de synchronisation selon la revendication 13, **caractérisé en ce que** chaque symbole du canal supplémentaire comprend un identifiant de position.

15. Procédé de synchronisation selon l'une quelconque des revendications 13 et 14, **caractérisé en ce que** ledit identifiant de position est inséré en fréquence.

16. Procédé de synchronisation selon la revendication 15, ladite technique multiporteuse utilisant une pluralité de fréquences sous-porteuses réparties sur une bande de fréquence déterminée, **caractérisé en ce que** ledit identifiant de position comprend des bits portés par des sous-porteuses regroupées dans une même portion prédéfinie de ladite bande de fréquence, de façon à subir un canal quasi-constant.

17. Procédé de synchronisation selon l'une quelconque des revendications 15 et 16, **caractérisé en ce que** ledit identifiant de position est codé avec un codage différentiel.

18. Procédé de synchronisation selon l'une quelconque des revendications 13 et 14, **caractérisé en ce que** ledit identifiant de position est inséré en temps.

19. Procédé de synchronisation selon l'une quelconque des revendications 13 à 18, **caractérisé en ce qu'**il comprend en outre une étape préalable de transmission par le canal principal d'une notification invitant ledit terminal à effectuer ladite synchronisation au niveau de l'entité considérée du canal supplémentaire, en vue d'un basculement du terminal du canal principal vers le canal supplémentaire.

20. Terminal d'un système de radiotéléphonie cellulaire, du type comprenant des moyens d'émission d'une voie montante principale, des moyens de réception d'une voie descendante principale et des moyens de réception d'au moins un canal supplémentaire,
ladite voie montante principale et ladite voie descendante principale formant un canal principal bidirectionnel symétrique assurant notamment la transmission à bas ou moyen débit de données et d'informations de signalisation et de contrôle,
ledit canal supplémentaire étant affecté au sens descendant uniquement, assurant notamment la transmission de données à haut débit, mettant en oeuvre une technique multiporteuse assurant une répartition des données dans l'espace temps/fréquence, et présentant une structure en entités prédéfinies comprenant chacune un nombre prédéterminé de symboles,
**caractérisé en ce qu'**il comprend des moyens de synchronisation du canal supplémentaire au niveau de l'entité considérée, comprenant eux-mêmes :
- des moyens de détection et lecture d'un identifiant de position d'un symbole courant sur le canal supplémentaire, ledit identifiant de position permettant d'identifier la position dudit symbole dans l'entité à laquelle il appartient ;
- des moyens de déduction du début de l'entité suivante en fonction de l'identifiant de position du symbole courant,
et **en ce que** lesdites entités prédéfinies sont des sous-trames (SF1, SF2,...) ou des trames (N, N+1) du canal supplémentaire.

21. Station de base d'un système de radiotéléphonie cellulaire, du type comprenant des moyens de réception d'une voie montante principale, des moyens d'émission d'une voie descendante principale et des moyens d'émission d'au moins un canal supplémentaire,
ladite voie montante principale et ladite voie descendante principale formant un canal principal bidirectionnel symétrique assurant notamment la transmission à bas ou moyen débit de données et d'informations de signalisation et de contrôle,
ledit canal supplémentaire étant affecté au sens descendant uniquement, assurant notamment la transmission de données à haut débit, mettant en oeuvre une technique multiporteuse assurant une répartition des données dans l'espace temps/fréquence, et présentant une structure en entités prédéfinies comprenant chacune un nombre prédéterminé de symboles,
**caractérisé en ce qu'**elle comprend des moyens d'insertion d'un identifiant de position dans au moins un symbole de chaque entité du canal supplémentaire, ledit identifiant de position permettant d'identifier la position dudit symbole dans ladite entité, de façon qu'un terminal puisse lire l'identifiant de position dudit symbole et en déduire le début de l'entité suivante, obtenant ainsi une synchronisation au niveau de l'entité considérée du canal supplémentaire,
et **en ce que** lesdites entités prédéfinies sont des sous-trames (SF1, SF2,...) ou des trames (N, N+1) du canal supplémentaire.

## Claims

1. Method of generating a cellular radiotelephone signal of the type comprising:
- a symmetrical bidirectional main channel comprising a main uplink and a main downlink, ensuring in particular the low-speed or medium-speed transmission of data and signalling and control information; and
- at least one additional channel solely assigned to the downlink, ensuring in particular high-speed data transmission, implementing a multi-carrier technology providing data distribution in time-frequency space, and having a structure consisting of predefined entities each comprising a predetermined number of symbols,
**characterized in that** it comprises a step in which a position identifier is inserted into at least one symbol of each entity of the additional channel, making it possible to identify the position of said symbol in said entity, so that a terminal can read the position identifier of said symbol and deduce therefrom the start of the next entity, thereby obtaining synchronization at the level of the respective entity of the additional channel,
and **in that** said predefined entities are subframes (SF1, SF2,...) or frames (N, N+1) of the additional channel.

2. Method of generation according to Claim 1, **characterized in that** each symbol of the additional channel comprises a position identifier.

3. Method of generation according to Claim 1 or 2, **characterized in that** the position identifier is inserted as a frequency insertion.

4. Method of generation according to Claim 3, said multi-carrier technology using a plurality of subcarrier frequencies distributed over a given frequency band (47), **characterized in that** said position identifier comprises bits carried by subcarriers grouped in one and the same predefined portion (48) of said frequency band so as to be subject to a quasi-constant channel.

5. Method of generation according to Claim 3 or 4, **characterized in that** said position identifier is coded with a differential coding.

6. Method of generation according to Claim 1 or 2, **characterized in that** said position identifier is inserted as a time insertion.

7. Method of generation according to any one of Claims 2 to 6, **characterized in that** said predefined entities are subframes (SF1, SF2,...) of the additional channel, and **in that** the main channel and/or the additional channel assure(s) the transmission of information relating to the row (within a frame of the structure of the additional channel) of a subframe whose start can be detected, so as to allow synchronization at the frame level of the additional channel by detecting the start of the next frame, as a function of said synchronization at the subframe level and of said information relating to the row of said subframe.

8. Method of generation according to Claim 7, **characterized in that** the main channel and/or the additional channel also assure(s) the transmission of information relating to the mode of transmission of the subframes on the additional channel, said synchronization at the frame level of the additional channel also being a function of said information relating to the transmission mode.

9. Method of generation according to any one of Claims 1 to 8, **characterized in that** the main channel implements a spread spectrum access (CDMA) technology and is preferably a UMTS link.

10. Method of generation according to any one of Claims 1 to 9, **characterized in that** said additional channel implements a multi-carrier technology based on an OFDM modulation or an IOTA modulation.

11. Method of generation according to any one of Claims 1 to 10, **characterized in that** the main channel first ensures the transmission of a notification inviting said terminal to effect said synchronization at the level of the respective entity of the additional channel, for the purpose of flipping the terminal from the main channel to the additional channel.

12. Method of generation according to Claim 11, **characterized in that** said notification is transmitted on a paging channel included in said main channel.

13. Method of synchronizing an additional channel associated with a symmetrical bidirectional main channel, said symmetrical bidirectional main channel comprising a main uplink and a main downlink, ensuring in particular the low-speed or medium-speed transmission of data and signalling and control information, said additional channel being solely assigned to the downlink, ensuring in particular high-speed data transmission, implementing a multi-carrier technology providing data distribution in time-frequency space, and having a structure consisting of predefined entities each comprising a predetermined number of symbols,
**characterized in that** it comprises a step in which the additional channel is synchronized at the level of the respective entity, said step itself comprising the following steps:
- detection and reading (521, 522) of a position identifier of a common symbol on the additional channel, said position identifier making it possible to identify the position of said symbol in the entity to which it belongs; and
- deduction (523) of the start of the next entity as a function of the position identifier of the common symbol, and **in that** said predefined entities are subframes (SF1, SF2,...) of the additional channel or frames (N, N+1) of the additional channel.

14. Method of synchronization according to Claim 13, **characterized in that** each symbol of the additional channel includes a position identifier.

15. Method of synchronization according to Claim 13 or 14, **characterized in that** said position identifier is inserted as a frequency insertion.

16. Method of synchronization according to Claim 15, said multi-carrier technology using a plurality of subcarrier frequencies distributed over a given frequency band, **characterized in that** said position identifier comprises bits carried by subcarriers grouped in one and the same predefined portion of said frequency band so as to be subject to a quasi-constant channel.

17. Method of synchronization according to Claim 15 or 16, **characterized in that** said position identifier is coded with a differential coding.

18. Method of synchronization according to Claim 13 or 14, **characterized in that** said position identifier is inserted as a time insertion.

19. Method of synchronization according to any one of Claims 13 to 18, **characterized in that** it also comprises a prior step in which the main channel transmits a notification inviting said terminal to effect said synchronization at the level of the respective entity of the additional channel, for the purpose of flipping the terminal from the main channel to the additional channel.

20. Terminal of a cellular radiotelephony system of the type comprising means of emitting a main uplink, means of receiving a main downlink and means of receiving at least one additional channel, said main uplink and said main downlink forming a symmetrical bidirectional main channel ensuring in particular the low-speed or medium-speed transmission of data and signalling and control information, said additional channel being solely assigned to the downlink, ensuring in particular high-speed data transmission, implementing a multi-carrier technology providing data distribution in time-frequency space, and having a structure consisting of predefined entities each comprising a predetermined number of symbols,
**characterized in that** it comprises means of synchronizing the additional channel at the level of the respective entity, said means themselves comprising:
- means of detecting and reading a position identifier of a common symbol on the additional channel, said position identifier making it possible to identify the position of said symbol in the entity to which it belongs; and
- means of deducing the start of the next entity as a function of the position identifier of the common symbol, and **in that** said predefined entities are subframes (SF1, SF2,...) or frames (N, N+1) of the additional channel.

21. Base station of a cellular radiotelephony system of the type comprising means of receiving a main uplink, means of emitting a main downlink and means of emitting at least one additional channel, said main uplink and said main downlink forming a symmetrical bidirectional main channel ensuring in particular the low-speed or medium-speed transmission of data and signalling and control information, said additional channel being solely assigned to the downlink, ensuring in particular high-speed data transmission, implementing a multi-carrier technology providing data distribution in time-frequency space, and having a structure consisting of predefined entities each comprising a predetermined number of symbols,
**characterized in that** it comprises means of inserting a position identifier into at least one symbol of each entity of the additional channel, said position identifier making it possible to identify the position of said symbol in said entity, so that a terminal can read the position identifier of said symbol and deduce therefrom the start of the next entity, thereby obtaining synchronization at the level of the respective entity of the additional channel, and **in that** said predefined entities are subframes (SF1, SF2,...) or frames (N, N+1) of the additional channel.

## Patentansprüche

1. Verfahren zum Generieren eines Signals einer Zellularfunktelefonie des Typs, welcher umfasst:
- einen bidirektionalen symmetrischen Hauptkanal, der einen aufsteigenden Hauptpfad und einen absteigenden Hauptpfad umfasst, und der insbesondere die Übermittlung von Kontroll- und Signalgebungsdaten bzw. -informationen bei niedriger oder mittlerer Rate sicherstellt;
- mindestens einen einzig für die absteigende Richtung vorgesehenen Hilfskanal, welcher insbesondere die Übermittlung von Daten bei hoher Rate sicherstellt, wobei der Hilfskanal eine die Verteilung der Daten in dem Zeit-/Frequenz-Raum sicherstellende Mehrträger-Technik einsetzt, und welcher eine Struktur vordefinierter Entitäten, welche jeweils eine vorgegebene Anzahl an Symbolen umfassen, aufweist,
**dadurch gekennzeichnet, dass** das Verfahren einen Schritt zum Einfügen eines Positions-Kennzeichens in zumindest ein Symbol jeder Entität des Hilfskanals umfasst, welches ermöglicht, die Position des Symbols in der Entität derart zu kennzeichnen, dass ein Terminal das Positions-Kennzeichen des Symbols lesen kann und daraus auf den Beginn der folgenden Entität schließen kann, wodurch eine Synchronisation auf Ebene der betrachteten Entität des Hilfskanals erhalten wird,
und dass die vordefinierten Entitäten Unterrahmen (SF1, SF2, ...) oder Rahmen (N, N+1) des Hilfskanals sind.

2. Verfahren zum Generieren nach Anspruch 1, **dadurch gekennzeichnet, dass** jedes Symbol des Hilfskanals ein Positions-Kennzeichen umfasst.

3. Verfahren zum Generieren nach einem der Ansprüche 1 und 2, **dadurch gekennzeichnet, dass** das Positions-Kennzeichen frequenzbezogen eingefügt wird.

4. Verfahren zum Generieren nach Anspruch 3, wobei die Mehrträger-Technik eine Vielzahl an auf einem vorbestimmten Frequenzband (47) verteilten Subträger-Frequenzen nutzt, **dadurch gekennzeichnet, dass** das Positions-Kennzeichen Bits umfasst, welche durch Subträger getragen sind, die in einem gleichen vordefinierten Abschnitt (48) des Frequenzbandes umgruppiert sind, so dass ein quasi-konstanter Kanal akzeptiert wird.

5. Verfahren zum Generieren nach einem der Ansprüche 3 und 4, **dadurch gekennzeichnet, dass** das Positions-Kennzeichen mit einer differenziellen Kodierung kodiert wird.

6. Verfahren zum Generieren nach einem der Ansprüche 1 und 2, **dadurch gekennzeichnet, dass** das Positions-Kennzeichen zeitbezogen eingefügt wird.

7. Verfahren zum Generieren nach einem der Ansprüche 2 bis 6, **dadurch gekennzeichnet, dass** die vordefinierten Entitäten Unterrahmen (SF1, SF2, ...) des Hilfskanals sind, und dass der Hauptkanal und/oder der Hilfskanal die Übermittlung von zum Rang eines Unterrahmens, von welchem der Beginn detektiert werden kann, relativen Informationen inmitten von einem Rahmen der Struktur des Hilfskanals sicherstellt bzw. sicherstellen, so dass eine Synchronisation auf Rahmen-Ebene des Hilfskanals durch Detektieren des Beginns des folgenden Rahmens in Abhängigkeit von der Synchronisation auf Unterrahmen-Ebene und von der zum Rang des Unterrahmens relativen Information ermöglicht wird.

8. Verfahren zum Generieren nach Anspruch 7, **dadurch gekennzeichnet, dass** der Hauptkanal und/oder der Hilfskanal ferner die Übertragung von zum Übertragungsmodus der Unterrahmen relativen Informationen auf dem Hilfskanal sicherstellt bzw. sicherstellen, wobei die Synchronisation auf Rahmen-Ebene des Hilfskanals ferner eine Funktion von den zum Übertragungsmodus relativen Informationen ist.

9. Verfahren zum Generieren nach einem der Ansprüche 1 bis 8, **dadurch gekennzeichnet, dass** der Hauptkanal eine Spektrumsspreizungs-Zugangstechnik (CDMA) einsetzt, und dass der Hauptkanal vorzugsweise ein UMTS-Link ist.

10. Verfahren zum Generieren nach einem der Ansprüche 1 bis 9, **dadurch gekennzeichnet, dass** der Hilfskanal eine auf einer OFDM-Modulation oder einer IOTA-Modulation basierende Mehrträger-Technik einsetzt.

11. Verfahren zum Generieren nach einem der Ansprüche 1 bis 10, **dadurch gekennzeichnet, dass** der Hauptkanal vorab die Übermittlung einer Mitteilung sicherstellt, welche das Terminal auffordert, die Synchronisation auf Ebene der betrachteten Entität des Hilfskanals im Hinblick auf ein Wechseln des Terminals vom Hauptkanal auf den Hilfskanal auszuführen.

12. Verfahren zum Generieren nach Anspruch 11, **dadurch gekennzeichnet, dass** die Mitteilung auf einem in dem Hauptkanal beinhalteten Paging-Kanal übermittelt wird.

13. Verfahren zum Synchronisieren eines an einen bidirektionalen symmetrischen Hauptkanal assoziierten Hilfskanals,
wobei der bidirektionale symmetrische Hauptkanal einen aufsteigenden Hauptpfad und einen absteigenden Hauptpfad umfasst, und insbesondere die Übermittlung von Kontroll- und Signalgebungsdaten bzw. -informationen bei niedriger oder mittlerer Rate sicherstellt,
wobei der Hilfskanal einzig für die absteigende Richtung vorgesehen ist und insbesondere die Übermittlung von Daten bei hoher Rate sicherstellt, wobei der Hilfskanal eine die Verteilung der Daten in dem Zeit-/Frequenz-Raum sicherstellende Mehrträger-Technik einsetzt, und wobei der Hilfskanal eine Struktur vordefinierter, jeweils eine vorgegebene Anzahl an Symbolen umfassende Entitäten aufweist, **dadurch gekennzeichnet, dass** das Verfahren einen Schritt zum Synchronisieren des Hilfskanals auf Ebene der betrachteten Entität umfasst, welcher selbst die folgenden Schritte umfasst:
- Detektieren und Lesen (521, 522) eines Positions-Kennzeichens eines auf dem Hilfskanal laufenden Symbols, wobei das Positions-Kennzeichen ein Identifizieren der Position des Symbols in der Entität, zu welcher es gehört, ermöglicht;
- Ableiten (523) des Beginns der folgenden Entität in Abhängigkeit von dem Positions-Kennzeichen des laufenden Symbols,
und dass die vordefinierten Entitäten Unterrahmen (SF1, SF2, ...) des Hilfskanals oder Rahmen (N, N+1) des Hilfskanals sind.

14. Verfahren zum Synchronisieren nach Anspruch 13, **dadurch gekennzeichnet, dass** jedes Symbol des Hilfskanals ein Positions-Kennzeichen umfasst.

15. Verfahren zum Synchronisieren nach einem der Ansprüche 13 und 14, **dadurch gekennzeichnet, dass** das Positions-Kennzeichen in Bezug auf die Frequenz eingefügt wird.

16. Verfahren zum Synchronisieren nach Anspruch 15, wobei die Mehrträger-Technik eine Vielzahl an auf einem vorbestimmten Frequenzband verteilten Subträger-Frequenzen nutzt, **dadurch gekennzeichnet, dass** das Positions-Kennzeichen Bits umfasst, welche durch Subträger getragen sind, die in einer gleichen vordefinierten Portion des Frequenzbandes umgruppiert sind, so dass ein quasi-konstanter Kanal akzeptiert wird.

17. Verfahren zum Synchronisieren nach einem der Ansprüche 15 und 16, **dadurch gekennzeichnet, dass** das Positions-Kennzeichen mit einer differenziellen Kodierung kodiert wird.

18. Verfahren zum Synchronisieren nach einem der Ansprüche 13 und 14, **dadurch gekennzeichnet, dass** das Positions-Kennzeichen in Bezug auf die Zeit eingefügt wird.

19. Verfahren zum Synchronisieren nach einem der Ansprüche 13 bis 18, **dadurch gekennzeichnet, dass** es ferner einen vorausgehenden Schritt eines Übermittelns einer Mitteilung durch den Hauptkanal umfasst, wobei die Mitteilung das Terminal auffordert, die Synchronisation auf Ebene der betrachteten Entität des Hilfskanals im Hinblick auf ein Wechseln des Terminals des Hauptkanals auf den Hilfskanal auszuführen.

20. Terminal eines Systems einer Zellularfunktelefonie des Typs, welcher Mittel zur Emission eines aufsteigenden Hauptpfades, Mittel zum Empfangen eines absteigenden Hauptpfades und Mittel zum Empfangen mindestens eines Hilfskanals umfasst,
wobei der aufsteigende Hauptpfad und der absteigende Hauptpfad einen bidirektionalen symmetrischen Hauptkanal bilden, welcher insbesondere die Übermittlung von Kontroll- und Signalgebungsdaten bzw. -informationen bei niedriger oder mittlerer Rate sicherstellt,
wobei der Hilfskanal einzig für die absteigende Richtung vorgesehen ist und insbesondere die Übermittlung von Daten bei hoher Rate sicherstellt, wobei der Hilfskanal eine die Verteilung der Daten in dem Zeit-/Frequenz-Raum sicherstellende Mehrträger-Technik einsetzt, und wobei der Hilfskanal eine Struktur vordefinierter, jeweils eine vorgegebene Anzahl an Symbolen umfassende Entitäten aufweist, **dadurch gekennzeichnet, dass** das Terminal Mittel zum Synchronisieren des Hilfskanals auf Ebene der betrachteten Entität umfasst, wobei die Mittel umfassen:
- Mittel zum Detektieren und Lesen eines Positions-Kennzeichens eines auf dem Hilfskanal laufenden Symbols, wobei das Positions-Kennzeichen ein Identifizieren der Position des Symbols in der Entität, zu welcher es gehört, ermöglicht;
- Mittel zum Folgern des Beginns der folgenden Entität in Abhängigkeit von dem Positions-Kennzeichens des laufenden Symbols,
und dass die vordefinierten Entitäten Unterrahmen (SF1, SF2, ...) des Hilfskanals oder Rahmen (N, N+1) des Hilfskanals sind.

21. Basisstation eines Systems einer Zellularfunktelefonie des Typs, welcher Mittel zum Empfangen eines aufsteigenden Hauptpfades, Mittel zur Emission eines absteigenden Hauptpfades und Mittel zur Emission mindestens eines Hilfskanals umfasst,
wobei der aufsteigende Hauptpfad und der absteigende Hauptpfad einen bidirektionalen symmetrischen Hauptkanal bilden, welcher insbesondere die Übermittlung von Kontroll- und Signalgebungsdaten bzw. -informationen bei niedriger oder mittlerer Rate sicherstellt,
wobei der Hilfskanal einzig für die absteigende Richtung vorgesehen ist und insbesondere die Übermittlung von Daten bei hoher Rate sicherstellt, wobei der Hilfskanal eine die Verteilung der Daten in dem Zeit-/Frequenz-Raum sicherstellende Mehrträger-Technik einsetzt, und wobei der Hilfskanal eine Struktur vordefinierter, jeweils eine vorgegebene Anzahl an Symbolen umfassende Entitäten aufweist, **dadurch gekennzeichnet, dass** die Basisstation Mittel zum Einfügen eines Positions-Kennzeichens in mindestens ein Symbol jeder Entität des Hilfskanals umfasst, wobei das Positions-Kennzeichen ermöglicht, die Position des Symbols in der Entität derart zu kennzeichnen, dass ein Terminal das Positions-Kennzeichen des Symbols lesen kann und daraus auf den Beginn der folgenden Entität schließen kann, wodurch eine Synchronisation auf Ebene der betrachteten Entität des Hilfskanals erhalten wird,
und dass die vordefinierten Entitäten Unterrahmen (SF1, SF2, ...) oder Rahmen (N, N+1) des Hilfskanals sind.
